# EUROPÄISCHE PATENTANMELDUNG

(11) **EP 0 595 280 A2**
(43) Veröffentlichungstag der Anmeldung: **04.05.1994**
(21) Anmeldenummer: 93117374.4
(22) Anmeldetag: 27.10.1993
(51) Int. Cl.: A01K 47/04, A01K 51/00

(54) **Verfahren und Vorrichtung zum Vermehren und Ausgleichen von Bienen und zum Ausschalten der Varroa-Milben**

(30) Priorität: 27.10.1992 DE 4236174
(71) Anmelder: Schmidt, Matthias, D-74229 Oedheim (DE)
(72) Erfinder: Schmidt, Matthias, D-74229 Oedheim (DE)
(74) Vertreter: Wasmeier, Alfons, Dipl.-Ing.

(57) **Zusammenfassung**

Eine Anlage zum Vermehren von Arbeiterinnenbienen und zum Züchten von Bienenköniginnen weist einzelne im Abstand voneinander angeordnete und über Umwegkanäle (5,6) miteinander verbundene Kästen (8,9,10) auf, wobei der Umwegkanal (5,6) mehrfach umgelenkt ist; die Kunststoffzellen der Anlage haben innerhalb einer Wabe (30) unterschiedliche Abmessungen, d.h. unterschiedliche Öffnungs- und Bodendurchmesser, und die Kunststoffwaben weisen jeweils mehrere Königinnenzellen (33) auf.
Zum Ausschalten der Varroa-Milbe in Bienenwaben werden zwischen den Brutwaben (30) aus Kunststoff oder Wachs Fangwaben (201) angeordnet, deren Zellenabmessungen etwa denen von Drohnenzellen entsprechen. Die Fangwaben (201) werden beabstandet zu einem Gitter (203) angeordnet, durch das die Arbeiterinnenbienen durchschlüpfen können, die Königin jedoch nicht. Dabei ist der Raum zwischen Fangwabe (201) und Fanggitter (203) geschlossen.

## Beschreibung

Die Erfindung bezieht sich auf eine Anlage nach dem Oberbegriff des Anspruches 1, ein verfahren nach dem Oberbegriff der Ansprüche 5 und 6, eine Kunststoffbienenwabe nach dem Oberbegriff des Anspruches 7, eine Bienenwabe nach dem Oberbegriff des Anspruches 12 sowie ein Verfahren nach dem Oberbegriff des Anspruches 16.

Für den Fortbestand der Bienenvölker sind zwei grundlegende Bedingungen entscheidend, nämlich, daß die Bienen sich durch Schwärmen vermehren können und daß die Bienen in der Lage sind, genügend Honig einzubringen, um überleben zu können.

Die Bienenhaltung durch Menschen ist maßgeblich auf hohen Honigertrag ausgerichtet. Dies wird. u.a. mit Völkern erreicht, denen künstlich ein Teil der Bienen entnommen wird und die zusätzlich Honig einbringen. Hierfür spielen vor allem die Erbanlagen "Fleiß" und "Brutfreudigkeit" eine maßgebliche Rolle. Da bisher das Schwärmen der Bienen weitgehend unterbunden wurde, ist die Erbanlage "Brutfreudigkeit" und damit auch die Erbanlage "Entwicklung" stark geschwächt worden.

Seit Jahren droht den Bienenvölkern eine außerordentliche Gefahr in Form der Varroa-Milben, die bisher im wesentlichen mit chemischen Mitteln bekämpft wurden. Die Bekämpfung mit Chemikalien hat das Problem jedoch nicht gelöst, wohl aber den Bienenvölkern selbst geschadet und den produzierten Honig chemisch verseucht.

Aus der DE-OS 33 42 485.3 sind Kunststoffwaben bekannt, mit denen eine Bekämpfung der Varroa-Milben auf natürlichem Wege möglich ist, da bei derartigen Kunststoffwaben die Bienen bereits einige Tage früher, nämlich etwa am 17. oder 18. Tag schlüpfen, während bei Wachswaben ein Schlüpfen erst am 21. Tag erfolgt. Nachdem die Varroa-Milben gleichzeitig mit den Bienen schlüpfen, sich aber erstmalig am 20. Tag paaren, können sich die Milben nicht fortpflanzen. Die Vorverlegung des Schlüpfzeitpunktes der Bienen beruht darauf, daß aufgrund des vergrößerten Zellendurchmessers derartiger Kunststoffwaben am vertieften, kegelförmigen Zellenboden eine größere Menge an Futtersaft bereitgestellt wird als bei Zellen mit zylindrischer Form, so daß die Maden besser ernährt werden und stärkere und widerstandsfähigere Jungbienen schlüpfen, letztlich somit stärkere Bienenvölker entstehen, die eine erhöhte Neigung zum Schwärmen haben und sich dadurch besonders gut vermehren.

Beim Einsatz derartiger Kunststoffwaben können die Bienen jedoch nachteilige Veränderungen erfahren; z.B. können Arbeiterinnenbienen bei zu guter Fütterung ihre Eierstöcke so stark entwickeln, daß sie sich ähnlich wie Königinnen verhalten und keinen Honig mehr sammeln.

Dem Einsatz derartiger Kunststoffwaben stehen u.a. relativ hohe Kosten für die Wabenherstellung gegenüber, da sämtliche Waben innerhalb einer Bienenbeute ersetzt werden müssen.

Aufgabe der Erfindung ist es, eine Bienenanlage und damit verbundene Vorrichtungen und Verfahren zu schaffen, mit denen das Vermehren von Bienen und gleichzeitig die Erzielung optimaler Bedingungen für Bienenvölker auf einfachem und wirtschaftlichem Weg ermöglicht wird. Weiterhin ist Aufgabe der Erfindung, ein Verfahren zum natürlichen Auslesen von Bienen auf Kunststoffwaben für die Anwendung bei einer derartigen Bienenanlage anzugeben. Schließlich ist auch Aufgabe der Erfindung, Mittel zur Bekämpfung der Varroa-Milbe zu schaffen, die einen relativ geringen Kostenaufwand erfordern, einfach zu realisieren sind und in bestehenden Bienenbeuten mit geringem Aufwand einsetzbar sind.

Gemäß der Erfindung werden diese Aufgaben mit den Merkmalen des Kennzeichens des Anspruches 1, des Anspruches 11 und des Anspruches 12 gelöst. Weitere Ausgestaltungen der Erfindung sind Gegenstand der Unteransprüche.

Damit die Veränderungen bei den Bienen und Bienenvölkern, die in mangelnder Brutfreudigkeit und/oder mangelndem Fleiß zum Ausdruck kommen, beim Einsatz von Kunststoffwaben nicht immer negativer werden, wird vorgeschlagen, einen Ausgleich innerhalb mehrerer Bienenvölker, eine besonders effiziente Vermehrung der Bienen und ein optimales Wachstum der Bienen dadurch vorzunehmen, daß zwei oder mehr in Serie geschaltete Bienenkästen jeweils über einen Umwegkanal miteinander verbunden werden, wobei die Weglänge durch diesen Umwegkanal ein Mehrfaches des Abstandes zwischen Kanaleingang und Kanalausgang beträgt, die einzelnen Bienenkästen Kunststoffwaben aufweisen, die innerhalb ein und derselben Wabe Zellen mit unterschiedlichem Bodendurchmesser besitzen, die so ausgebildeten Kunststoffwaben zusätzlich zu den Arbeiterinnenzellen mehrere Königinnenzellen aufweisen, damit Königinnen innerhalb dieser Anlage gezüchtet werden können, und zusätzlich gesonderte Drohnenzuchtwaben in den Bienenkästen vorgesehen werden, die als Teilwaben ausgebildet sind und von den Bienen mit eigenem Wachs ausgebaut werden.

Waben nach der Erfindung dienen sowohl als Brutwaben wie als Königinnenzuchtwaben bzw. Drohnenzuchtwaben. Für die Königinnenzucht werden den einzelnen Königinnenzellen Plättchen mit Zapfen zugeordnet, die in Ausnehmungen der Mittelwand eingesetzt werden. Die Plättchen stellen die Basis einer Königinnenzelle dar; auf die Plättchen werden Weiselzellen aufgesetzt. Nach dem Bestiften kann jede Königinnenzelle mit Plättchen für sich bzw. der die Gesamtheit dieser Königinnenzelle enthaltende Wabenteil von der Mittelwand abgenommen und bis zum Zeitpunkt des Schlüpfens der Königin zur Zwischenlagerung in eine andere Wabe eingesetzt werden.

Zum Züchten von Drohnenbienen ist in den Kunststoffwaben z.B. an den beiden unteren Eckabschnitten jeweils ein dreieckförmiger Bereich mit Drohnenzellen ausgebildet, der entweder direkt mit der Kunststoffwabe hergestellt oder mit dieser verbunden wird.

Anstelle derartiger Drohnenabschnitte innerhalb einer Bienenzuchtwabe kann eine gesonderte Drohnenzuchtwabe als Teilwabe vorgesehen sein, die etwa zu 1/3 bis 1/2 der Gesamtwabenfläche mit Drohnenzellen besetzt ist, während der übrige Raum von den Bienen mit Wachs bis zum Wabenrand ausgebaut werden kann. Die Varroa-Milben befallen dabei weitgehend die nachträglich aufgebauten Wachszellen, während die Kunststoff-Drohnenwaben weitgehend ohne Befall bleiben. Da Drohnenmaden bis zu 2 bis 3 Tage später schlüpfen als die Arbeiterinnenbienen, sind die Drohnenmaden bevorzugt durch die Varroa-Milben gefährdet.

Durch die Kästen mit Umwegkanal kann ein Teil eines Bienenvolkes in einen benachbarten Kasten wandern. Benachbarte Kästen sind voneinander beabstandet, damit verhindert wird, daß Ameisen die Kästen zerstören. Eingang und Ausgang zweier benachbarter Kästen liegen möglichst hoch, da dort die Temperatur höher ist als unten.

Die Umwegkanalanordnung besteht aus zwei identisch aufgebauten, spiegelbildlich in jeweils eine der einander zugewandten Kastenwände eingesetzten Hälften, deren jede einen Querkanal besitzt, der zum Verschließen eines Kastens versperrbar ist. Jedes Gehäusebauteil weist ferner eine Befestigungsvorrichtung auf, um die beiden Kästen miteinander zu verbinden. Die Bienenkästen sind vorzugsweise so ausgebildet, daß die Seitenwände eines jeden Kastens nach unten und innen geneigt sind, so daß der Raum zwischen zwei benachbarten Bienenkästen sich von oben nach unten verjüngt. Damit können die Waben leichter herausgenommen werden, und es ist ein einfaches Entformen der Kästen sichergestellt.

Durch den Einsatz von Kunststoffbienenwaben mit Königinnenzellen kann der Bienenzüchter selbst Bienenköniginnen züchten und Bienenvermehrung betreiben. Aufgrund unterschiedlicher Zellendurchmesser innerhalb einer Wabe läßt sich die Futtersafterzeugung beeinflussen und damit die Ernährung der Bienen steuern bzw. drosseln.

Es werden Kunststoffbienenwaben mit Mittelwand und beidseitigen Zellen mit voller Zellenwandhöhe vorgesehen, bei denen der Durchmesser des Bodens größer ist als der der Schlupföffnung und bei denen etwa 10 - 15 % der Gesamtzellen gleichmäßig verteilt zylindrische Wände aufweisen; die Zellenwände aller Zellen werden mit verringerter Wandstärke bei gleichbleibender Öffnungsweite der Zellen an der Schlupföffnung ausgeführt, und die Zellenwände sind so konstruiert, daß ihre Masse etwa der Hälfte der Masse der Zellenwände herkömmlicher Waben entspricht. Die Dicke der die konischen Zellen begrenzenden Zellenwände beträgt an der Schlupföffnung z.B. 1,0 mm und am Boden etwa zwischen 0,4 und 0,7 mm. Der Zellenboden derartiger Brutraumzellen ist gerundet, z.B. kugelkalottenförmig ausgebildet; dies ergibt ein maximales Volumen für den Futtersaft und führt zu einer schnelleren Entwicklung und damit zu einem früheren Schlüpfen der Bienen.

Um leistungsfähigere und widerstandsfähigere Bienen züchten zu können, wird bei der Vermehrung von möglichst gesunden, leistungsfähigen und widerstandsfähigen Arbeiterinnenbienen ausgegangen und eine natürliche Auslese vorgenommen. Für diese Auslese werden mehrere, z.B. fünf Bienenvölker, parallel zueinander getestet. Aus jedem der ausgewählten fünf Völker wird die Königin eliminiert und auf eine isolierte Kunststoffwabe gesetzt. Die Königin legt in die Zellen der Kunststoffwabe Eier. Nach etwa 13 Tagen kommt diese Wabe in den Brutschrank. Von den geschlüpften Maden wird eine bestimmte Anzahl, z.B. 100, markiert. Anschließend werden von jedem der fünf Völker jeweils z.B. 500 Ammenbienen entnommen und mit den aus den 100 markierten Maden geschlüpften Bienen gemischt; nach ca. 8 Tagen wird nochmals die gleiche Menge von Ammenbienen entnommen und gegen die vorher entnommenen Ammenbienen ausgewechselt. Dieses Gemisch wird in gesonderte Kästen mit Kunststoffwaben eingesetzt und von diesen Kleinvölkern wird jeweils die Entwicklungszeit getestet. Die Bienen aus den unterschiedlichen Kästen schlüpfen nach unterschiedlicher Zeitdauer, so daß die Kästen mit den am besten entwickelten Bienen auf einfache Weise festgestellt werden können. Bienen aus diesen Kästen werden zur weiteren Zucht verwendet. Bei diesen Bienen läßt sich eine kürzere Entwicklungsdauer erzielen. Neben Arbeiterinnenbienen können nach dieser Methode auch Königinnenbienen gezüchtet werden, so daß insgesamt kräftigere und widerstandsfähigere Bienenvölker mit leistungsfähigeren und längerlebigen Arbeiterinnenbienen erzielt werden.

In der Praxis läßt sich eine durchschnittliche Verteilung verschiedener Bienenvölker nach dem Kriterium der Futtersafterzeugung vornehmen. Manche Bienenvölker sind in der Lage, besonders große Futtersaftmengen zu erzeugen, was zu einer extrem guten Entwicklung der Bienen führt. Eine zweite Gruppe von Bienenvölkern erzeugt weniger Futtersaft, so daß die Bienen weniger kräftig und widerstandsfähig sind. Bei einer dritten Gruppe von Bienenvölkern ist die Futtersafterzeugung noch geringer; derartige Völker überstehen den Winter nur stark geschwächt. Bei einer vierten Gruppe, bei der die Futtersafterzeugung noch geringer ist, muß der Mangel mit Honig ausgeglichen werden. Eine fünfte Gruppe von Bienenvölkern, bei der der erzeugte Futtersaft völlig unzureichend ist, macht erforderlich, daß im Frühjahr mehrere Völker zusammengelegt werden müssen. Diese Völker sind natürlich geschwächt und empfindlich gegen Krankheiten.

Die Erbanlage "Futtersafterzeugung" und die optimale Bereitstellung von bieneneigenem Futtersaft ist für Wachstum und Widerstandskraft der Bienen entscheidend. Dieser Futtersaft wird an die jüngsten Maden etwa drei Tage lang gefüttert. Für diese Fütterung müssen genügend Ammenbienen vorhanden sein; deren Anzahl kann dadurch pro Wabe vergrößert werden, daß die Zellenwände sehr dünn gemacht und somit mehr Zellen innerhalb einer Made untergebracht werden. Die Zellenwände an der dünnsten Stelle sind ca. 0,3 mm und an der dicksten Stelle ca. 1,3 mm. Etwa 3 % der Zellen der Kunststoffwabe sind so ausgebildet, daß sie sich nach innen verjüngen, wobei diese Zellen auch zum Auswerfen dienen. Auf jeder Wabenseite wird ein Drohnenzelleneck vorgesehen, das verhindert, daß aus einigen Arbeiterinnenzellen verkrüppelte Drohnen schlüpfen. Des weiteren erhält die Kunststoffwabe einen Kunststoffstreifen, der verhindert, daß die Bienen Wachszellen anbauen.

In der Praxis wird bei einer aus drei miteinander gekoppelten Bienenkästen bestehenden Anlage nur das mittlere Volk bearbeitet; in die beiden äußeren Völker wird nicht eingegriffen, mit Ausnahme des Honigschleuderns. Etwa alle 10 Tage werden alle Bienen aus dem mittleren Kasten entnommen, wobei die Königin dort verbleibt. Dies bedeutet, daß Bienen aus den beiden anderen Kästen in den mittleren Kasten eindringen und diesen bevölkern, so daß ein neues Bienenvolk entsteht. Damit wird ein Nachzüchten von Bienen erreicht, wobei durch Auslese besonders kräftige, leistungsfähige und widerstandsfähige Völker erzielt werden. Durch Verhindern des Schwärmens kann der Vermehrung der Varroa-Milbe entgegengewirkt werden.

Das Erkennen dieser Zusammenhänge ermöglicht dem Bienenzüchter eine natürliche Auslese von Bienen durchzuführen. Die Erbanlagen der Bienen werden durch die Königin und den jeweiligen Drohn bestimmt. Ob aus einem Arbeiterinnenei eine Königin hervorgeht, hängt maßgeblich von Dauer und Intensität der Fütterung ab.

Zur Bekämpfung der Varroa-Milben ist entscheidend, daß die Milben Drohnenzellen bevorzugen, deren Öffnungsdurchmesser und deren Futtervorrat größer ist als der normaler Brutzellen. Bei einem Nebeneinander von normalen Brutzellen und z.B. Drohnenzellen befallen die Varroa-Milben die Drohnenzellen wesentlich stärker als die normalen Brutzellen. Mit der Erfindung wird deshalb vorgeschlagen, in die normalen Brutwaben einer Bienenbeute eine sog. "Fangwabe" einzusetzen, deren Zellenöffnungen einen wesentlich größeren Durchmesser als die normalen Brutzellen haben, und die eine größere Futtersaftmenge aufnehmen können, so daß die Varroa-Milben verstärkt angelockt werden. Die Königin wird etwa 15 - 20 Tage in diese Fangwabe eingesperrt und bestiftet die in diese Zellen gelegten Eier; nach ca. 10 Tagen werden diese Zellen verdeckelt. Bereits vorher haben die Varroa-Milben diese Zellen befallen und sind in diesen Fangzellen mit relativ hoher Konzentration vorhanden. Anschließend wird die Fangzelle entfernt, eine neue Fangzelle eingesetzt und die Königin aus der alten Fangzelle in die neue eingebracht, während die alte Fangzelle mit Varroa-Milben besetzt gereinigt wird. Dieser Vorgang wird wiederholt. Da die Königin innerhalb dieses Bienenvolkes in den Fangzellenraum eingeschlossen ist, bleiben alle Brutzellen der Bienenbeute, während die Königin eingesperrt ist, unbestiftet; derart unbestiftete Zellen werden von Varroa-Milben nicht befallen.

Wird dieser Vorgang zeitlich in Abständen wiederholt, können immer mehr Varroa-Milben in den Fangzellen gefangen und vernichtet werden; während der übrigen Zeit kann die Königin ihre Eier in die Brutzellen in herkömmlicher Weise legen, und die Bienenmaden können sich ohne Beeinträchtigung durch die Varroa-Milben in diesen Brutzellen entwickeln. Während somit bei herkömmlichen Methoden mit Kunststoffwaben versucht wurde, ein möglichst frühes Schlüpfen der Bienen zu erreichen, nämlich bevor die Milben Gelegenheit gehabt hatten, sich zu paaren und zu vermehren, wird mit Hilfe derartiger Fangwaben erreicht, daß möglichst viele Varroa-Milben in die Fangwabe gelangen und dort vernichtet werden können.

Ferner wird das Schwärmen des Bienenvolkes mit derartigen Fangzellen unterbunden. Der Schwärmvorgang ist für den Imker besonders arbeitsintensiv - etwa 60 - 70 % der Gesamtarbeitszeit für ein Bienenvolk sind dem Schwärmvorgang gewidmet. Es hat sich gezeigt, daß die Bienenvölker den meisten Honig liefern, die sich am besten entwickeln, d.h. am besten ernährt werden und die ohne Schwarmstimmung sind. Es ist bekannt, daß das Schwärmen die Produktivität der Bienen entscheidend vermindert. Wird das Schwärmen auf züchterischem Wege verhindert, werden entscheidende positive Anlagen der Bienen ausgeschaltet bzw. geschwächt. Die Schwarmstimmung wird deshalb dadurch unterbunden, daß einem schwärmenden Bienenvolk mehrere verdeckelte Brutwaben mit möglichst vielen Jungbienen entnommen werden, wobei die übrigen Eigenschaften der Bienen unverändert bleiben. Dadurch, daß die Bienenkönigin dem Bienenvolk entzogen und in der Fangwabe etwa 15 - 20 Tage gefangen wird, und daß die vergrößerten Zellen der Fangwabe eine größere Menge an Futtersaft aufnehmen als Zellen normaler Abmessungen, sind die Arbeiterinnenbienen mit der Bereitstellung dieser größeren Mengen an Futtersaft beschäftigt, so daß die Schwarmstimmung unterbunden wird.

Nachstehend wird die Erfindung in Verbindung mit der Zeichnung anhand eines Ausführungsbeispieles erläutert. Es zeigt:
- Fig. 1: einen Teil einer Anlage bestehend aus drei Bienenkästen in Serie,
- Fig. 2: eine abgeänderte Ausführungsform eins Bienenkastens nach Fig. 1,
- Fig. 3: einen Schnitt längs der Linie I-I in Fig. 1,
- Fig. 3a -3e: die Darstellung des Umwegkanals mit Kunststoffgehäusebauteil und mit Schieber in verschiedenen Ansichten,
- Fig. 4: eine Kunststoffbienenwabe nach der Erfindung in Aufsicht von einer Seite,
- Fig. 5: die Kunststoffbienenwabe nach Fig. 4 in Aufsicht von der anderen Seite,
- Fig. 6: einen Schnitt durch die Wabe im Abschnitt A nach Fig. 4,
- Fig. 7: einen Schnitt durch die Wabe im Abschnitt B nach Fig. 5,
- Fig. 8: ein Detail einer Königinnenzelle nach Fig. 7,
- Fig. 9: eine Aufsicht auf eine Teilkunststoffwabe für die Drohnenzucht,
- Fig. 10: eine schematische Schnittansicht durch einen Teil einer Kunststoffbienenwabe herkömmlicher Art,
- Fig. 11: eine schematische Schnittansicht durch einen Teil einer Kunststoffbienenwabe nach der Erfindung,
- Fig. 12: eine schematische Aufsicht auf einen Teil der Wabe nach Fig. 11 in verkleinertem Maßstab,
- Fig. 13: eine schematische Darstellung der durchschnittlichen Verteilung der Futtersafterzeugung auf verschiedene, naturbelassene Bienenvölker,
- Fig. 14: eine entsprechende Verteilung der Futtersafterzeugung bei gezüchteten Bienenvölkern herkömmlicher Art,
- Fig. 15: einen Schnitt durch einen Teil einer abgeänderten Ausführung einer Wabe,
- Fig. 16: einen Ausschnitt aus der Wabe nach Fig. 15,
- Fig. 17: in Aufsicht ein Detail einer Kunststoffwabe,
- Fig. 18: einen Ausschnitt aus einer Bienenwabe, wie sie als Fangwabe verwendet wird, in Aufsicht,
- Fig. 19: einen Ausschnitt aus einem Fanggitter, das über die Fangwabe gesetzt wird, in Aufsicht,
- Fig. 20: einen Schnitt durch die Fangwabe nach Fig. 18, wobei beidseitig der Mittelwand Zellen ausgebildet sind,
- Fig. 21: einen Schnitt durch eine Fangwabe nach Fig. 18, wobei die Fangwabe als Mittelwand mit einseitigen Zellen ausgebildet ist.
- Fig. 22: schematisch eine Bienenbeute mit angedeuteten Bienenwaben und einer Fangwabe,
- Fig. 23: eine Fangwabe mit Fanggitter im Schnitt, und
- Fig. 24: einen Schnitt durch eine Zelle einer Fangwabe nach der Erfindung.

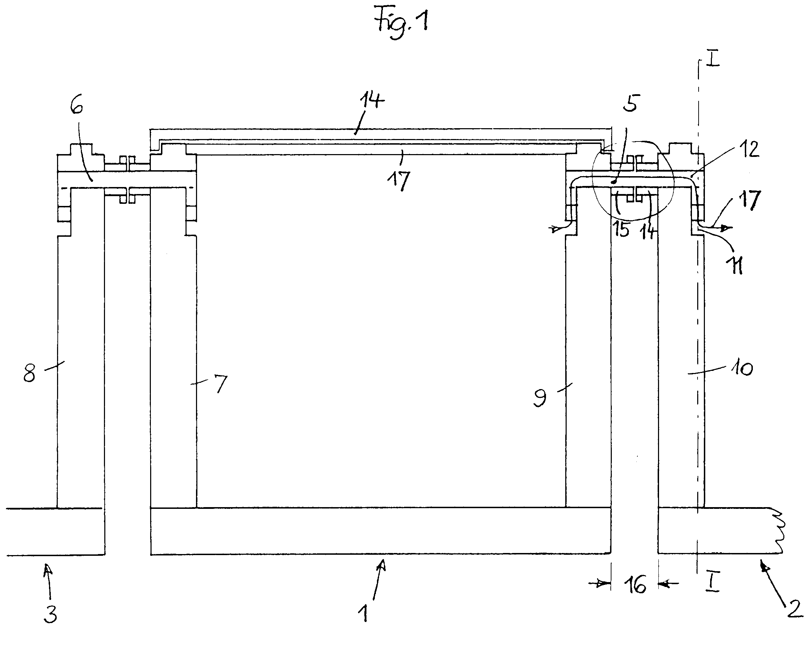

Die Anlage nach Fig. 1 zeigt drei Bienenkästen 1, 2, 3 nebeneinander angeordnet. Der Kasten 1 ist mit einm Deckel 4 abgeschlossen dargestellt, die anderen Kästen weisen entsprechende Deckel auf. Die Kästen 1 und 2 sowie 1 und 3 sind miteinander durch jeweils einen Umwegkanal 5, 6 verbunden. Die Umwegkanäle 5, 6 sind im obersten Bereich der Seitenwandungen 7, 8 und 9, 10 der Kästen ausgebildet. Dabei ist in Fig. 3 mit 11 die untere Öffnung, die der Eingang bzw. Ausgang des Umwegkanales ist, und mit 12 die obere Öffnung, die den unmittelbaren Übergang von einem Kasten in den anderen darstellt, bezeichnet. 13 stellt eine Zwischenwand dar, die den Umwegkanal mäanderförmig unterteilt, damit die vom einen Kasten über den Umwegkanal in den anderen Kasten gelangenden Bienen eine größere Wegstrecke zurücklegen müssen. 14 und 15 stellen die Anschlußverbindungen für zwei nebeneinander angeordnete Kästen dar, 16 bezeichnet den Abstand zweier benachbarter Kästen voneinander. Der Weg, den die Bienen von einem Kasten in den benachbarten zurücklegen, ist in Fig. 1 durch Pfeil bezeichnet.

Mit 17-1 (Figur 3a - 3e) ist das Kunststoff-Gehäuseteil, das jeweils auf den einander zugewandten Seiten zweier Bienenkästen im Umwegkanal angeordnet ist, bezeichnet. Dieses Gehäuseteil weist einen Durchgang 17-2 mit Öffnung 17-3 von einem Kasten in den benachbarten auf. Ferner hat das Gehäuseteil 17-1 auf der Oberseite eine Ausnehmung 17-4, die zur Aufnahme einer U-förmigen Klammer 17-5 dient, die die beiden aneinanderliegenden Gehäuseteile 17-1 und damit die beiden benachbarten Bienenkästen miteinander verbindet. Die Öffnungen 17-3 werden mit Hilfe eines von oben einsetzbaren Schiebers 17-6 verschlossen. Diese Schieber sind einteilig L-förmig ausgebildet, so daß der vertikale Schenkel 17-7 die Öffnung 17-3 verschließt und der waagerechte Schenkel 17-8 auf der Oberseite des Gehäuseteils 17-1 aufliegt. Zur Aufnahme der Klammer 17-5 kann diese Oberseite eine Aussparung haben.

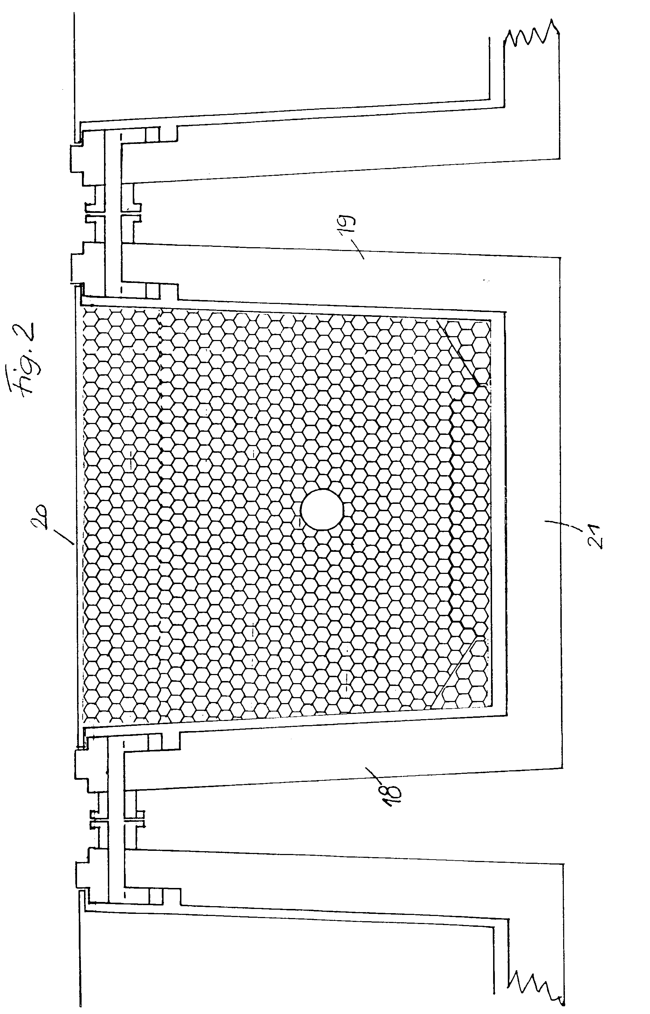

Bei der Ausführungsform nach Fig. 2 sind die Seitenwände 18, 19 der Bienenkästen schräg angeordnet, derart, daß die Wände 18, 19 von der Oberseite 20 zum Boden 21 des Kastens einen zunehmend geringeren Abstand aufweisen. Die Differenz dieser Abstände beträgt ca. 15 bis 20 mm, d.h. jeweils ca. 7,5 bis 10 mm auf jeder Seite.

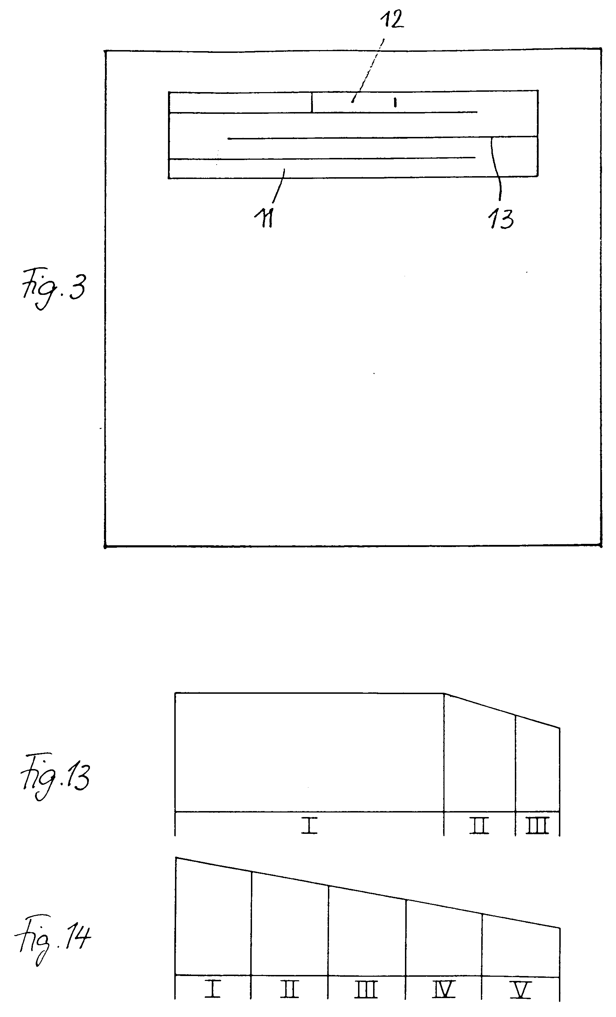

In den Figuren 4 - 8 ist die in Verbindung mit der Anlage nach Fig. 1 bzw. 2 verwendete Kunststoffbienenwabe 30 dargestellt. Diese Kunststoffbienenwabe ist eine Wabe mit Mittelwand, auf der beidseitig in herkömmlicher Weise Zellen ausgebildet sind. Im Gegensatz zu herkömmlichen Kunststoffbienenwaben weist die Wabe 30 nach der Erfindung einen auswechselbaren Wabenteil 31 auf, der am unteren Rand der Wabe 30 angeordnet ist und der auf der einen Seite der Wabe 30 (Fig. 4) mit Zellen 32 versehen ist, die denen der übrigen Wabe voll entsprechen, während auf der gegenüberliegenden Seite der Wabe (Fig. 5) Königinnenzellen 33 im Bereich des Wabenteiles 31 ausgebildet sind, die in Serie nebeneinander angeordnet sind und die etwa die doppelte Größe von Normalzellen haben. Die Wabe 30 besteht aus einer Mittelwand 34 mit von der Mittelwand ausgehenden Zellen 35, 36, die konische, sich von der Mittelwand nach außen verengende Zellenräume besitzen, die durch die sich konisch nach außen erweiternden Zellenwände 37 begrenzt sind. Das Ausmaß der Konizität der Wände 37 variiert in der Weise, daß zwei oder mehrere Typen von Zellenwänden unterschiedlicher Konizität vorgesehen werden, die gesamten Zellen 35, 36 jedoch den gleichen Außendurchmesser (die gleiche Öffnungsweite) haben, während der Durchmesser der Zellen am Zellenboden entsprechend dieser unterschiedlichen Konizität unterschiedlich ist. Bei einem Teil der Zellen kann die Konizität der Zellenwände praktisch gleich Null werden, d.h., daß der Zelleninnenraum dann zylindrisch ist, wobei eine minimale Konizität aus Herstellungsgründen erforderlich ist. Unterschiedlich dimensionierte Zellenwände und damit Zellen können dabei etwa gleichförmig über die gesamte Wabenfläche verteilt vorgesehen sein.

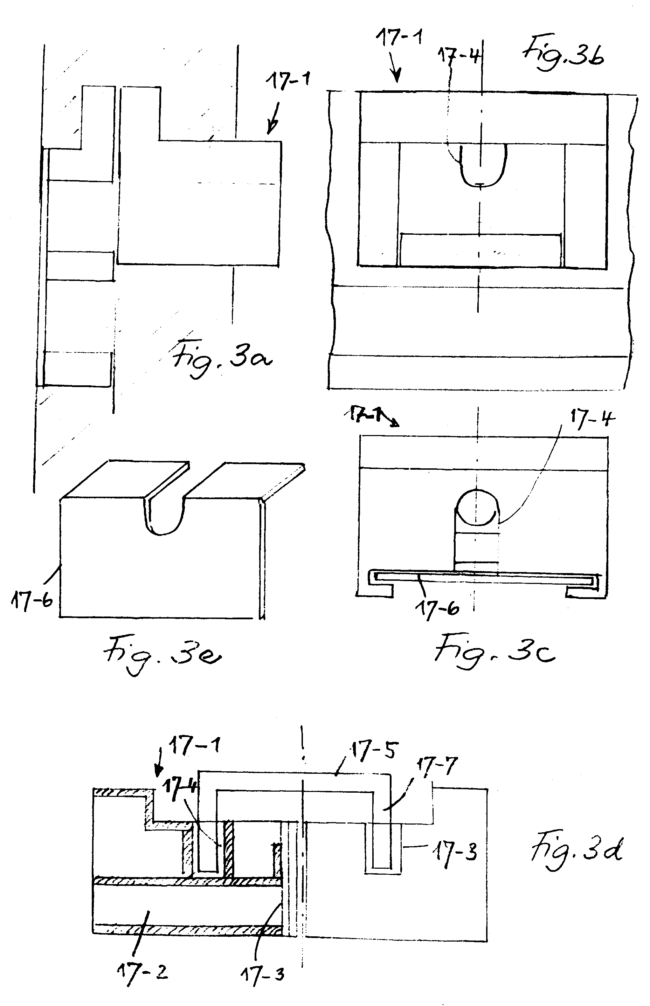

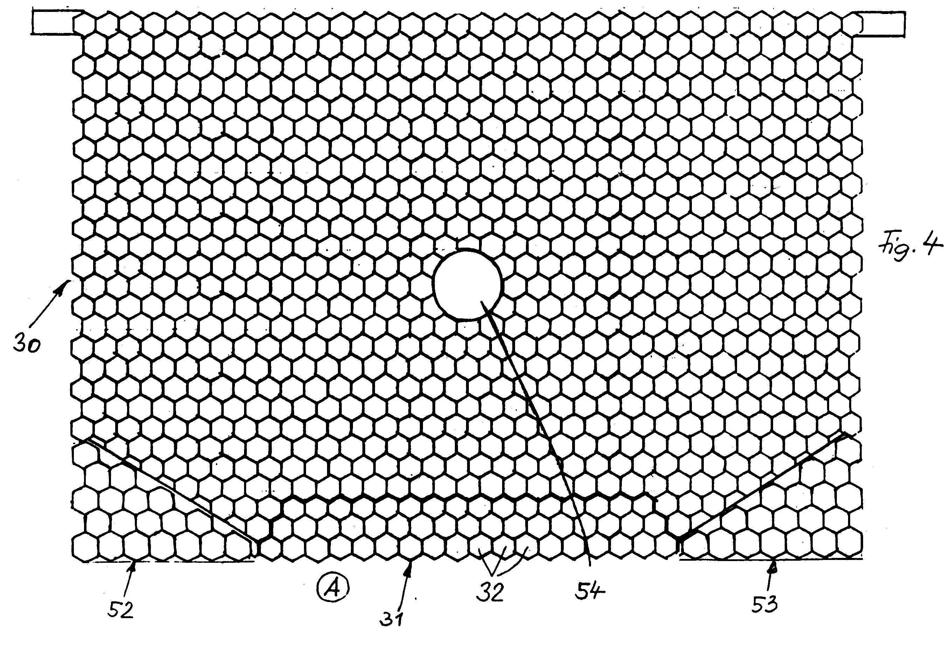

Der auswechselbare Wabenteil 31 ist in die Wabe 30 einsteckbar oder in entsprechender Weise damit lösbar verbunden ausgeführt. Der Aufbau dieses Wabenteiles 31 ist so, daß der entsprechende Teil der Mittelwand zweiteilig, d.h. in zwei Teilwänden ausgebildet ist, nämlich in Form einer ersten durchgehenden Mittelwand 38 und einer aus einzelnen Plättchen gebildeten zweiten Mittelwand 39, die beide unmittelbar aufeinander liegen und die die Gesamtmittelwand ausbilden. Mit 41 sind die Weiselzellen bezeichnet, die durch Wandungen 42, 43 begrenzt sind (die Wandungen sind sechseckförmig im Muster herkömmlicher Wachs- und Kunststoffwaben hergestellt - die Fig. 6 und 7 zeigen Querschnitte). Die Weiselzellen 41 mit zylindrischem Querschnitt und sechseckförmigen Begrenzungswandungen durchgehend etwa gleicher Dicke haben in diametraler Richtung gesehen den doppelten Durchmesser der auf der entgegengesetzten Seite der Mittelwand ausgebildeten normalen Zellen. Der Zellenboden 44 dieser Weiselzellen 41 ist jeweils in Form eines Plättchens 40 ausgebildet, die Vertiefung 45 entspricht in ihren Abmessungen der Tiefe des Bodens 46 der gegenüberliegenden Normalzellen (Arbeiterinnenzellen). Die geraden Teile 47, 48 des Bodens weisen Zapfen, Ansätze oder dgl. 49, 50 auf, die in entsprechend ausgebildete Vertiefungen des Plättchens 40 eingesteckt werden, während die Plättchen jeweils einen Zapfen 51 oder dergl. besitzen, der in eine entspr. Vertiefung des Mittelwandabschnittes 38 eingesteckt wird, so daß durch diese Steckverbindung die Weiselzellen mit den Plättchen 40 und diese mit der Mittelwand verbunden sind. Die Zellenböden 44 bzw. 46 der Weiselzellen und der Normalzellen sind in den Mittelwandteilen 39 und 38 ausgebildet, wobei die Vertiefungen 45 in der Größe genau den Vertiefungen 46 entsprechen, so daß dann, wenn die Weiselzellen durch Normalzellen mit geringerem Durchmesser ersetzt werden, die Vertiefung 45 der Vertiefung einer Normalzelle genau entspricht.

Auf die Plättchen 40 werden die Weiselzellen mit unten und oben offener sechseckig zylindrischer Gestalt lösbar befestigt, z.B. durch Stecken oder auch durch Kleben. Damit können die Weiselzellen zusammen mit ihren den Boden darstellenden Plättchen aus der Kunststoffwabe entnommen werden, wenn in der Zelle eine Königinnenmade gewachsen ist und diese Königinnenmade für die Königinnenzucht verwendet und in ein getrenntes Bienenvolk eingesetzt werden soll.

Bei der Ausführungsform der Kunststoffwabe nach Fig. 4 und 5 ist an den beiden unteren Ecken jeweils ein dreieckförmiger kleiner Abschnitt 52, 53 dargestellt, der ausschließlich aus Drohnenzellen besteht, die einen größeren Durchmesser als herkömmliche Arbeiterinnenzellen haben. Diese Zellen sind ausschließlich für die Drohnenzucht vorgesehen. Sie sind einstückig mit der übrigen Bienenwabe 30 aus Kunststoff hergestellt oder aber diese Ecken mit Drohnenzellen werden gesondert an entsprechend ausgesparte Waben angesetzt, z.B. angeschraubt, angeklebt oder dgl. Desweiteren ist in der Mitte der Kunststoffwabe 30 eine große Öffnung 54 vorgesehen. Diese Öffnung hat den Zweck, daß die Bienen bei zunehmender Kälte von einer Wabe zur nächsten wandern können. Bei Kunststoffbienenwaben bauen die Bienen den bei Wachswaben seitlich verbleibenden unbebauten Rand zum Rahmen zu und versperren sich damit den Weg von einer Wabe zur nächsten. Wie in Fig. 17 dargestellt, wird bei einer abgeänderten Ausführungsform der Erfindung die kreisrunde Öffnung 54 durch eine Form 54' ersetzt, die im wesentlichen aus drei ineinandergreifenden Kreisen zusammengesetzt ist.

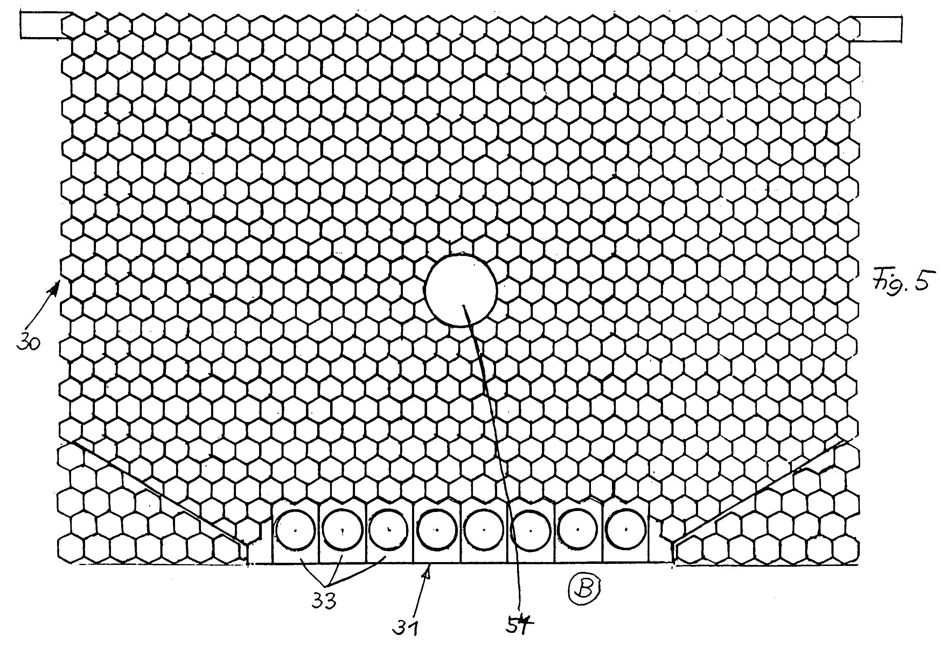

In weiterer Ausgestaltung der Erfindung wird eine Teilkunststoffwabe vorgeschlagen, die in Fig. 9 dargestellt ist und die für die Drohnenzucht bestimmt ist. Eine derartige Teilwabe nimmt etwa 1/3 bis 1/2 der Gesamtfläche einer herkömmlichen Arbeiterinnen-Bienenwabe ein und besteht ausschließlich aus den größeren Drohnenzellen. Bei der speziellen Ausführungsform der Erfindung werden im Bienenkasten 70 Holzleisten 71 befestigt, die in ihrem mittleren Bereich die Drohnenteilwabe 72 aufnehmen. Beispielsweise ist die Teilwabe 72 über Schraubverbindungen 73, 74 so befestigt, daß die Wabe 72 von der Holzleiste 71 in den freien Raum des Bienenkastens 70 hineinragt. Die Leiste 71 wird dabei zweckmäßigerweise seitlich auf die Begrenzungswände 75, 76 des Bienenkastens 70 aufgelegt, so daß die Teilwabe 72 an der Holzleiste 71 aufgehängt vertikal nach unten in den Raum 77 hineinragt, wobei eine Mehrzahl von Teilwaben 72 in parallelen Ebenen nebeneinaner angeordnet sein können. Der Raum zwischen der Außenbegrenzung der Teilwabe 72 und den Innenwänden bzw. dem Boden des Bienenkastens 70 wird von den Bienen mit Wachszellen aufgebaut und gefüllt. Die Teilwabe 72 hat dabei die Aufgabe, die in den Fig. 3 und 4 an den inneren Ecken vorgesehenen Drohnenzellen zu ersetzen. Da die Drohnenmaden 2 bis 3 Tage später als die Arbeiterinnenmaden schlüpfen, besteht bei ihnen die erhöhte Gefahr, daß sie von den Varroa-Milben befallen werden. Da ferner die Varroa-Milben die Wachszellen bevorzugen und dort ihre Eier legen, wird mit der Teil-Kunststoffdrohnenwabe erreicht, daß die Zellen innerhalb dieser Teilwabe erheblich weniger von den Varroa-Milben aufgesucht werden, da diese vor allem in die die Teilwabe umgebenden Wachszellen Eier legen. Damit wird verhindert, daß die Varroa-Milben in den Kunststoffzellen überhand nehmen, so daß die Drohnen in diesen Kunststoffzellen einen extrem geringen Milbenbefall aufweisen.

Die Darstellung in den Figuren 10 - 12, die nicht maßstabsgetreu ist, zeigt eine Kunststoffwabe 100 in einem Ausschnitt aus einer Zellenwandanordnung 101 und 102, jeweils auf den beiden entgegengesetzten Seiten einer schematisch angedeuteten Mittelwand 103. Die Zellenwandanordnung 101 bzw. 102 stellt einen Teil einer gespritzten Kunststoffwabe aus einer Vielzahl von kegelstumpfförmigen Zellen 104 dar, die durch sich von oben nach unten gleichförmig verjüngende Zellenwände 105 begrenzt sind. Die Zellenwände 105 sind, wie durch eine Mittelachse 106 schematisch angedeutet, symmetrisch ausgebildet. Die obere Stirnfläche ist mit 107, die untere Stirnfläche mit 108 bezeichnet. 109 und 110 sind die konischen Seitenwandflächen, die die einzelnen Zellen begrenzen. Die Zellenwandflächen 109 und 110 legen jeweils eine Schlupföffnung 111 und einen Boden 112 einer jeden Zelle fest. Bei dieser bekannten Ausführungsform sind sämtliche Zellen der gesamten Wabe identisch ausgebildet. Der Durchmesser der Schlupföffnung 111 beträgt dabei 5,4 mm, der Durchmesser des Bodens 112 etwa 6,5 mm. Die Dicke der Zellenwand 105 beträgt an der oberen Stirnfläche 107 etwa 1,6 mm und an der unteren Stirnfläche 108 etwa 0,9 mm.

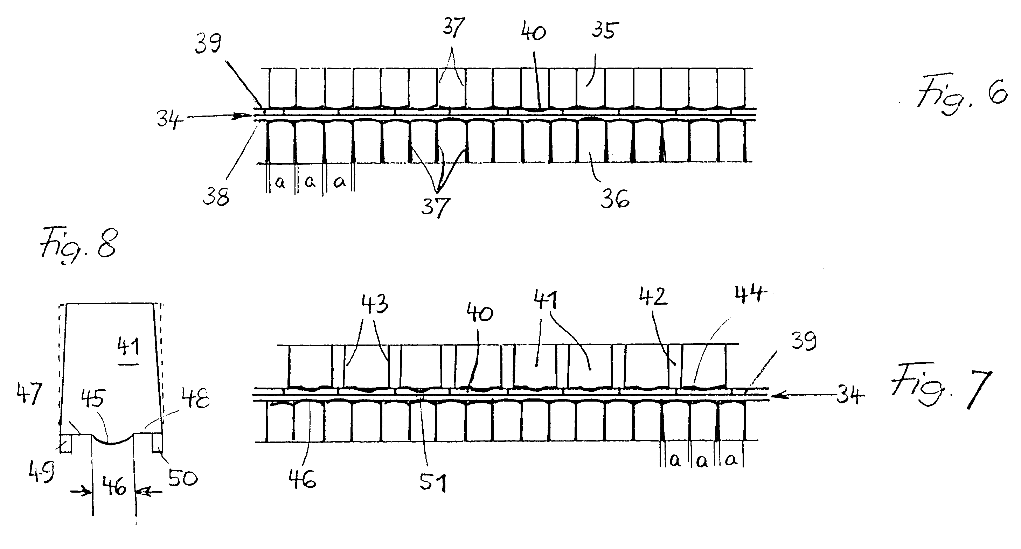

Bei der Kunststoffwabe nach den Figuren 11 und 12 ist ein Teil der Zellen in Form zylinderförmiger Zellen 113 ausgebildet; die im Schnitt dargestellten zylindrischen Wandflächen 114 und 115 der Wände 116, 117 begrenzen die Zelle 113. Die Zellenwände 118 und 119 der benachbarten Zellen 120, 121 sind jeweils konisch, d.h. sich nach unten verjüngend ausgebildet. Die die konischen Zellen 120, 121 bildenden Zellenwände 118, 119 dieser Waben sind im Vergleich zu denen nach Fig. 10 (Stand der Technik) mit erheblich geringerer Dicke, und zwar etwa der Hälfte der Dicke ausgebildet. Die zylindrischen Zellen 113 derartiger Waben sind so bemessen, daß ihre Schlupföffnung 122 den gleichen Wert von 5,4 mm wie die entsprechender Zellen nach Fig. 10 hat; analog der zylindrischen Ausbildung einer derartigen Zelle hat der Boden ebenfalls einen Durchmesser von 5,4 mm. Die übrigen Zellen, die kegelstumpfförmig sind, haben einen Durchmesser an der Schlupföffnung von 5,4 mm und am Boden von etwa 6,0 mm. Die Zellenwände 116, 117 haben an der oberen Stirnfläche eine Dicke von etwa 1,0 mm und an der unteren Stirnfläche von 0,4 mm. Die entsprechenden Abmessungen der Zellenwände 123 und 124, die miteinander eine zylindrische Zelle begrenzen, haben an der oberen Stirnfläche eine Dicke von 1,0 mm und an der unteren Stirnfläche von 0,7 mm. Der Boden 125 der einzelnen Zellen ist symmetrisch gewölbt vertieft ausgebildet, wobei die Form der Vertiefung vorzugsweise kugelkalottenförmig ist. Diese gerundete Vertiefung des Bodens ergibt eine besonders günstige Gestalt zur Aufnahme eines möglichst großen Volumens für den Futtersaft, der von den Ammenbienen eingebracht wird. Im Gegensatz hierzu ist bei bekannten Kunststoffwaben der Boden kegelförmig ausgebildet, wie dies bei den natürlichen Wachswaben der Fall ist. Die maximale Höhe der Vertiefung ist bei den Zellen nach Fig. 11 in etwa gleich der der Zellen nach Fig. 10.

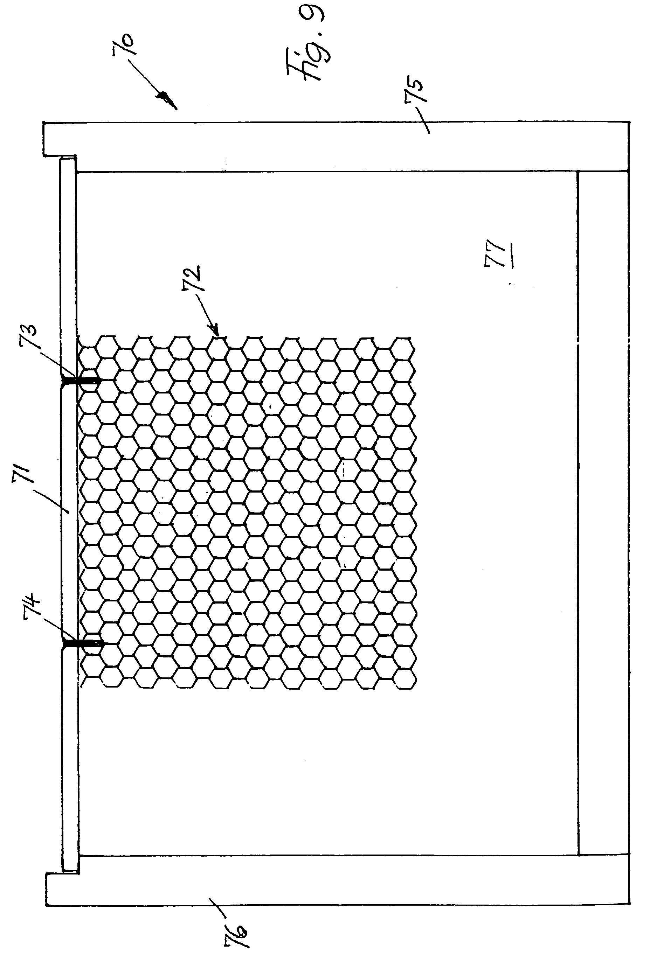

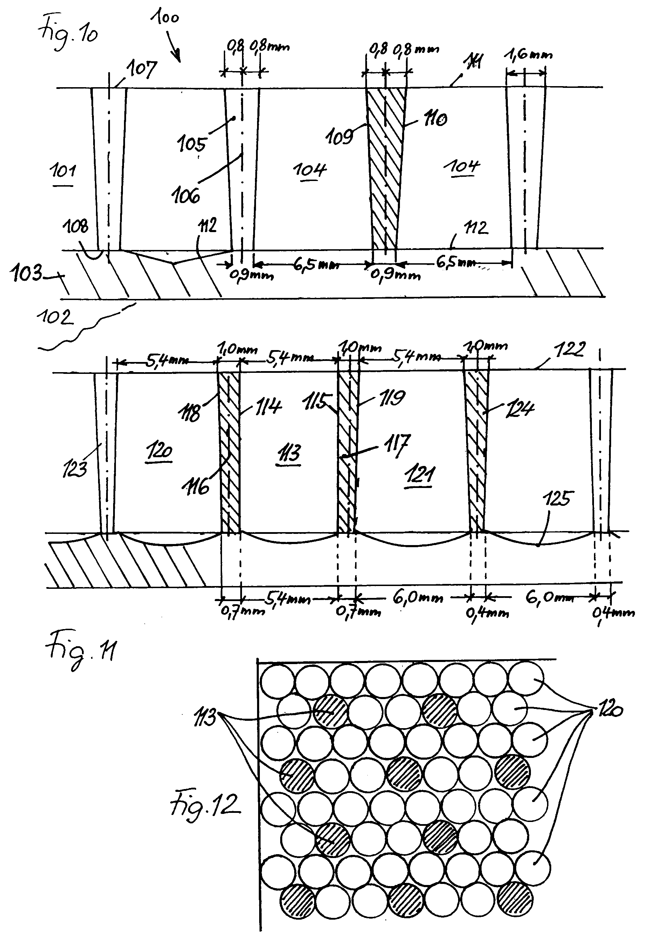

Bei der schematischen Darstellung der durchschnittlichen Verteilung der Futtersafterzeugung auf verschiedene, naturbelassene Bienenvölker in Fig. 13 und der entsprechenden Darstellung der Verteilung der Futtersafterzeugung bei gezüchteten, derzeitigen Bienenvölkern in Fig. 14 lassen sich die Bienenvölker in unterschiedliche Qualitäten der Futtersafterzeugung einteilen. Hierbei sind in Fig. 13 die Bienenvölker in drei Gruppen I, II, III eingeteilt, wobei die weitaus größte Gruppe I Bienenvölker mit besonders guter Futtersafterzeugung beinhaltet, während die Gruppe II Bienenvölker mit geringerer, jedoch ausreichender Futtersafterzeugung darstellt, und die Gruppe III die Bienenvölker mit geringer Futtersafterzeugung bezeichnet.

Im Gegensatz hierzu sind bei der Darstellung nach Fig. 14 etwa entsprechend den praktischen Gegebenheiten (und entsprechend der Einteilung in Fig. 13) die Gruppen I - V etwa in gleicher Stärke vertretenn, wobei die Bienenvölker der Gruppe I eine besonders gute Futtersafterzeugung aufweisen, die bei den anschließenden Gruppen II, III zunehmend geringer wird und die Bienenvölker der Gruppen IV und V eine völlig ungenügende Futtersafterzeugung haben, so daß diese Völker alleine nicht überleben können. Mit einer derartigen Einteilung in unterschiedliche Gruppen wird der Bienenzüchter für die Zucht Bienenvölker der Gruppe I auswählen, um damit optimale Ergebnisse seiner Zucht zu erzielen.

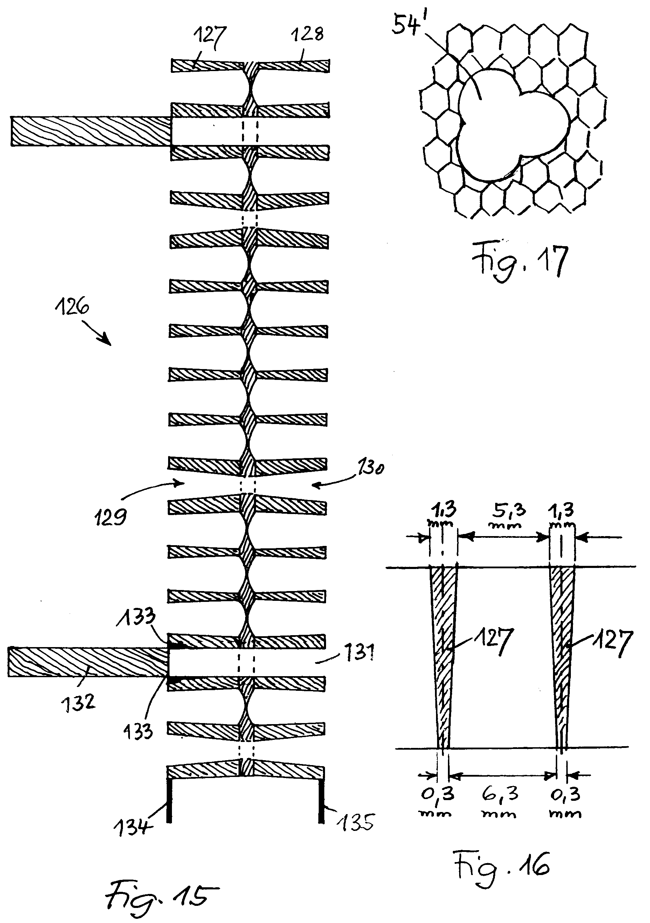

Bei der Ausführungsform einer Kunststoffwabe 126 nach Fig. 15 sind die Zellenwände 127, 128 von der Mittelwand ausgehend nach außen mit zunehmender Wandstärke ausgeführt, wie dies in Fig. 16 im einzelnen dargestellt ist. Die dünnste Stelle der Zellenwände 127, 128 liegt dabei mit einer Dicke von ca. 0,3 mm an der Mittelwand, während die Wanddicke außen etwa 1,3 mm beträgt, und die Dicke von innen nach außen kontinuierlich zunimmt. Zwischen diesen Zellen sind, etwa in einem Anteil von 3% über die Gesamtwabe verteilt, Zellen 129, 130 vorgesehen, die eine wesentlich stärkere Zellenwand haben, die von außen nach innen in der Stärke zumindest gleich bleibt und vorzugsweise zunimmt, so daß der Durchmesser dieser Zellenräume 129, 130 von außen nach innen geringer wird. Diese Zellen 129, 130, deren Wandungen stärker als die der übrigen Zellen sind, werden gleichzeitig als Auswerfer verwendet.

Die Zellen mit zylindrischer Form 131 der Innenwände dienen zur Aufnahme von durchgehenden Zapfen 132, um die Mittelwand und die beidseitig zur Mittelwand angeordneten Zellenwände der Wabe miteinander zu verbinden. Das Einsetzen von Zapfen in die zylindrischen Zellen muß einzeln von Hand vorgenommen werden, was besonders mühsam, zeitaufwendig und damit kostenintensiv ist. Mit der Erfindung wird deshalb vorgeschlagen, die Verbindungszapfen 132 mit einer der Zellenwände an der Öffnung bei 133 verbunden herzustellen, so daß der Zapfen bei der Herstellung der jeweiligen Öffnung in die Wabe integriert ist und dann alle Zapfen auf einmal mit Hilfe einer Druckplatte in die entsprechenden zylindrischen Zellen eingedrückt werden können, was eine erhebliche Arbeitseinsparung ergibt. Ferner sind an der Wabe nach Fig. 15, die stehend in den Bienenkasten eingehängt wird, auf der Unterseite an der Außenwand durchgehende Ansätze 134, 135 ausgebildet, die sich in Form von Schienen über die gesamte Tiefe der Wabe (senkrecht zur Zeichenebene nach Fig. 15) erstrecken. Damit wird verhindert, daß die Bienen im Anschluß an die untersten Zellenwände Wachszellen anbauen, die dann alle Nachteile bisheriger Wachszellen in Verbindung mit der Varroa-Milbe besitzen würden.

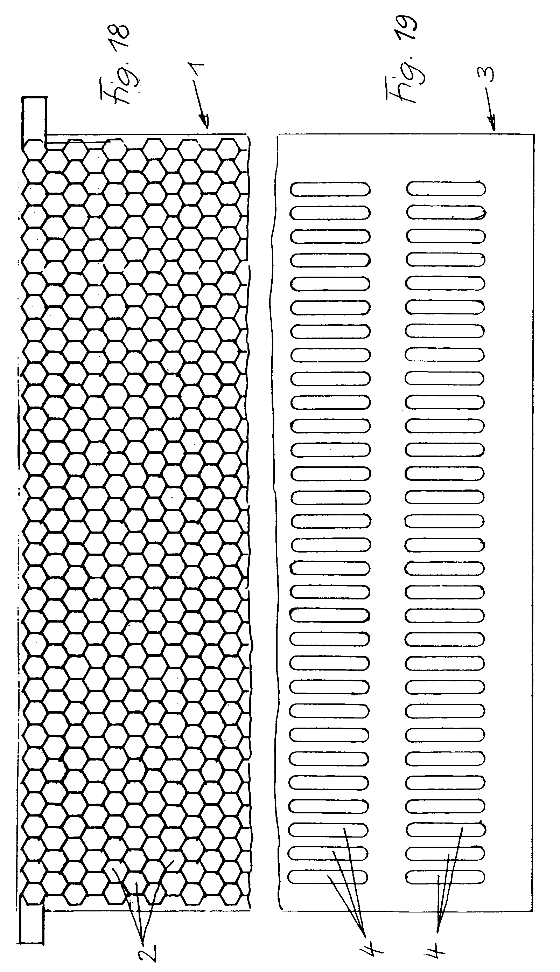

Eine Fangwabe 201 nach Fig. 18 ist eine Bienenwabe aus Wachs oder Kunststoff, deren Zellen mit einem vergrößerten Durchmesser ausgebildet sind, wobei der Durchmesser etwa dem von Drohnenzellen entspricht. Die Außenabmessungen einer derartigen Fangwabe entsprechen genau denen einer herkömmlichen Bienenwabe, wobei lediglich weniger Zellen auf gleicher Fläche angeordnet sind. In Fig. 19 ist ein Fanggitter 203 dargestellt, das mehrere Reihen von langlochartigen Öffnungen 204 besitzt und über der Fangwabe 201 angeordnet ist. Die Öffnungen bzw. Schlitze 204 haben eine Breite, die kleiner ist als dem Körper der Königin entspricht, jedoch größer ist als dem Körper einer Arbeiterinnenbiene entspricht, so daß die Königin, die auf die Fangwabe 201 aufgesetzt ist, durch das Fanggitter 203 nicht entweichen kann, wohl aber die Arbeiterinnenbienen durch das Fanggitter hindurch in die Fangwabe gelangen können, ebenso wie die Varroa-Milben.

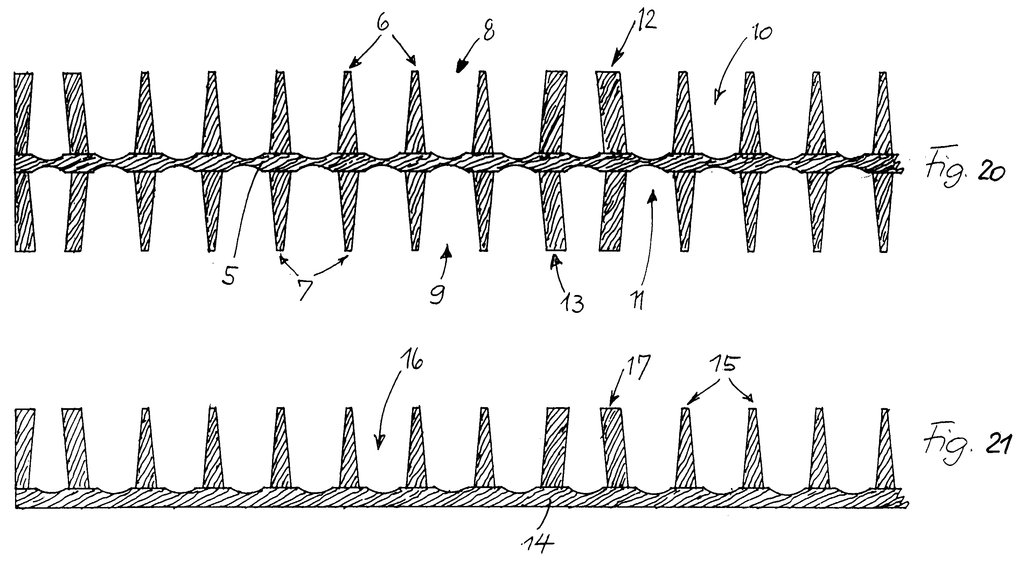

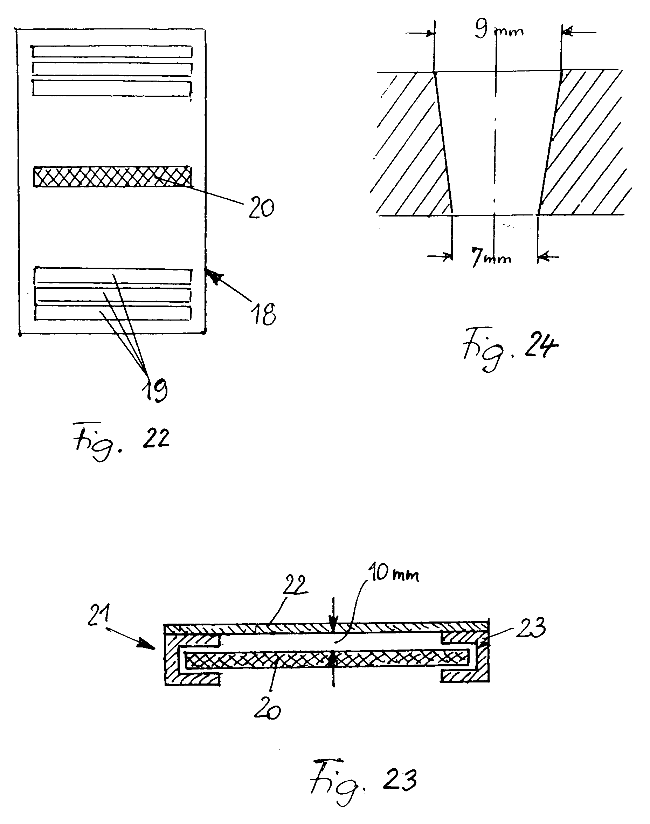

In den Fig. 20 und 21 sind zwei verschiedene Ausführungsformen der Fangwabe im Schnitt dargestellt. Bei der Ausführungsform nach Fig. 20 sind beidseitig der Mittelwand 205 Zellenwandungen 206 und 207 vorgesehen, die sich nach außen verjüngen, so daß der Durchmesser der Einlaßöffnung 208 bzw. 209 in die Zellen 210 bzw. 211 größer ist als der Durchmesser des jeweiligen Zellenbodens. Zwischen derartigen Zellen 210 und 211 sind jeweils im Abstand von mehreren Zellen Auswerfer 212, 213 vorgesehen, die ein Auswerfen der Kunststoffzellen aus der Spritzgießmaschine ermöglichen. Die Fangwabe nach Fig. 21 ist eine Ausführungsform, die der Hälfte der Fig. 20 entspricht, nämlich eine Mittelwand 214 besitzt, an die sich Zellenwandungen 215 einseitig anschließen, die einseitige Zellen 216 bzw. Auswerfer 217 ausbilden.

In Fig. 22 ist eine Bienenbeute 218 schematisch dargestellt, in der übereinander Brutwaben 219 aus Wachs oder Kunststoff vorgesehen sind, wobei eine dieser Waben 219 durch eine Fangwabe 220 ersetzt ist, die entsprechend der Darstellung nach den Fig. 18, 20 oder 18, 21 wahlweise mit einem Fanggitter nach Fig. 19 ausgebildet ist.

Die Fangvorrichtung 221 nach Fig. 23 besteht aus der eigentlichen Fangwabe 220 und dem Fanggitter 222, das auf ein die Fangwabe 220 aufnehmendes Rähmchen 223 aufgesetzt ist. Der Abstand zwischen Fanggitter 222 und Fangwabe 220 beträgt beispielsweise 10 mm.

Die Öffnungsweite der Zellen einer derartigen Fangwabe beträgt ca. 9 mm. Die Zellen können zylindrisch oder sich nach innen verjüngend, z.B. bis zu einem Bodendurchmesser von 7 mm ausgeführt sein, die Höhe der Zellenwand beträgt etwa 12 bis 13 mm.

## Patentansprüche

1. Anlage zum Vermehren von Arbeiterinnenbienen und zum Züchten von Bienenköniginnen in Kunststoffbienenwaben zur Erzielung leistungsfähigerer und widerstandsfähigerer Bienen mit die einzelnen Kunststoffbienenwaben aufnehmenden, einzelnen, nebeneinander angeordneten Bienenkästen, die jeweils über einen Umwegkanal miteinander verbunden sind, **dadurch gekennzeichnet**, daß
a) die einzelnen Kästen im Abstand voneinander angeordnet und über den Umwegkanal (5, 6) miteinander verbunden sind, dessen Eingang und Ausgang jeweils im obersten Bereich eines Kastens angeordnet sind, wobei vorzugsweise jeweils zwei benachbarte Kästen (8, 9, 10) durch einen mechanischen Verschluß (14, 15) und durch eine zusätzliche Abdichtung nach außen miteinander verbunden sind,
b) der Umwegkanal ein Mehrfaches an Weglänge verglichen mit dem kürzesten Abstand zwischen Eingang und Ausgang hat, indem die Wegführung des Umwegkanales mehrfach umgelenkt wird,
c) die Zellen der Kunststoffwaben (30) innerhalb einer Wabe unterschiedliche Abmessungen aufweisen, und zwar sowohl Zellen mit einem Öffnungsdurchmesser von ca. 5,4 mm und einem Bodendurchmesser von ca. 6,4 mm, als auch Zellen mit einem Öffnungsdurchmesser von etwa 5,4 mm und einem Bodendurchmesser von etwa 5,4 mm bzw. einem entsprechenden Wert zwischen 5,4 mm und 6,4 mm,
d) die Kunststoffwaben (30) jeweils mehrere Königinnenzellen (33) aufweisen, die auf einer Seite der Wabenmittelwand mit einem Öffnungsdurchmesser von ca. 10 mm und einem Bodendurchmesser von ca. 15 mm bei einer Wabenwandhöhe von ca. 6,4 mm ausgebildet sind, und die auswechselbar bzw. abnehmbar mit der Wabe verbunden sind.

2. Anlage nach Anspruch 1, dadurch gekennzeichnet, daß der Umwegkanal (12) in seinem Inneren mehrere zueinander parallele Wände (11, 12, 13) aufweist, deren Länge kürzer ist als der Abstand der beiden Kanalaußenwände, und die abwechselnd aufeinander folgend mit der einen und mit der gegenüberliegenden Kanalaußenwand derart befestigt sind, daß die Durchgangsrichtung durch den Kanal mäanderförmig ist.

3. Anlage nach Anspruch 1 oder 2, dadurch gekennzeichnet, daß die Seitnwandungen (18, 19) der im Bodenbereich vollständig geschlossenen Kästen von der offenen Oberseite zum Boden nach unten und innen geneigt ausgebildet sind, und daß der Abstand zweier gegenüberliegender Seitenwandungen (18, 19) im Bodenbereich ca. 1,5 bis 2,0 cm kleiner ist als im Deckenbereich.

4. Anlage nach Anspruch 1, dadurch gekennzeichnet, daß jeder Kasten eine Hälfte eines Umwegkanales aufweist, daß die beiden Hälften jeweils in Aussparungen der beiden einander zugewandten Wände der beiden zugeordneten Kästen angeordnet sind, daß die Übergänge zwischen den beiden Kästen in Form zweier identischer, spiegelbildlich symmetrisch angeordneter Kunststoffgehäuse ausgebildet sind, die einen Eingang vom Umwegkanal des Kastens und einen Kanaldurchgang zum gegenüberliegenden Gehäuse des anderen Kastens aufweisen, und daß die beiden einander unmittelbar zugewandten Ausgänge der Gehäuse durch Schieber verschließbar sind, damit jeder Kasten für sich getrennt und geschlossen transportabel ist, wobei vorzugsweise das Gehäuse auf der Oberseite eine Vertiefung aufweist, in die eine die beiden Gehäuse und damit die beiden Kästen miteinander verbindende U-förmige Klammer einsetzbar ist.

5. Verfahren zum Vermehren von Bienenvölkern und zum Züchten von Bienenköniginnen in einer Bienenvermehrungsanlage nach einem der Ansprüche 1 - 4, dadurch gekennzeichnet, daß in zwei in Serie geschalteten, miteinander durch Umwegkanäle verbundenen Bienenkästen, die jeweils mit einem Bienenvolk und mit Kunststoffwaben besetzt sind, ein Teil eines der beiden Völker entnommen und als neues Volk in einen unbesetzten, zweiten Kasten eingebracht wird, der mit dem ersten Kasten über den Umwegkanal verbunden ist, und daß dieses Volk mit einer Bienenkönigin besetzt wird, die aus einer der Königinnenzellen der Kunststoffwabe nach Anspruch 1 gezogen worden ist, wobei die nicht benötigten Königinnen aus den besetzten Königinnenzellen entnommen und anderweitig verwendet werden.

6. Verfahren zum Züchten von Bienenköniginnen mit einer Anlage nach Anspruch 1, dadurch gekennzeichnet, daß in einer Kunstsstoffbienenwabe mehrere Königinnenzellen zusammen mit den übrigen Arbeiterinnenzellen auf einer Seite der Mittelwand ausgebildet werden, daß diese Königinnenzellen in Form von Plättchen mit Jungmaden von der Mittelwand abgenommen werden, daß auf die Plättchen mit Jungmaden Weiselzellen aus Kunststoff aufgesetzt werden, daß die Weiselzellen nach dem Verdeckeln bis auf eine Weiselzelle aus der Wabe zur Verwendung in anderen Bienenvölkern kurz vor dem Schlüpfen entnommen werden, und daß die zurückbleibende Königinnenmade nach dem Schlüpfen in dem jeweiligen Volk belassen wird.

7. Kunststoffbienenwabe zur Durchführung des Verfahrens nach Anspruch 5 und zur Verwendung in einer Anlage nach den Ansprüchen 1 - 4, dadurch gekennzeichnet, daß die Kunststoffbienenwabe (30) auf einer Seite der Mittelwand (34) anstelle der üblichen Arbeiterinnenzellen (32; A) mehrere Plättchen (40; B) mit einem Durchmesser von ca. 10 mm und einer Höhe von ca. 1,5 mm aufweist, daß über den Plättchen (40) Weiselzellen (41) aus Kunststoff mit einem Öffnungsdurchmesser am freien Ende von ca. 15 mm ausgebildet sind, und daß Plättchen und Weiselzellen miteinander von der Mittelwand der Kunststoffbienenwabe einzeln abnehmbar ausgebildet sind, wobei vorzugsweise die Wabe eine Höhe von ca. 340 mm, eine Breite von ca. 370 mm und Zellen mit einer Zellenwandhöhe von ca. 10 mm besitzt, und die Gesamtstärke der Wabe einschließlich Abstandhalter ca. 30 mm beträgt.

8. Kunststoffbienenwabe nach Anspruch 7, dadurch gekennzeichnet, daß in der Mitte der Wabe eine etwa kreisrunde, durchgehende Öffnung (54) mit einem Durchmesser von etwa 12 mm vorgesehen ist.

9. Kunststoffbienenwabe mit Mittelwand und beidseitig der Mittelwand mit Zellen voller Zellenwandhöhe ausgebildeteten Zellenwänden, die von der Schlupföffnung zum Boden konisch verjüngt ausgebildet sind und einen Boden mit größerem Durchmesser als dem der Schlupföffnung haben, insbesondere für die Vewendung bei einer Anlage nach Anspruch 1, dadurch gekennzeichnet, daß etwa 10 -15% der Gesamtzellen Zellen mit zylindrischen Wänden sind, welche etwa gleichförmig zwischen den anderen Zellen verteilt sind, daß die Zellenwände aller Zellen eine verringerte Wandstärke bei gleichbleibender Öffnungsweite der Zelle an der Schlupföffnung haben, und daß die Masse der Zellenwände etwa die Hälfte der Masse der Zellenwände herkömmlicher Waben beträgt, wobei vorzugsweise die Zellenwanddicke der die konischen Zellen begrenzenden Zellenwände an der Schlupföffnung etwa 1,0 mm und am Zellenboden etwa 0,4 mm bei gleichmäßiger Konizität beträgt, die Zellenwanddicke der die zylindrischen Zellen begrenzenden Zellenwände an der Schlupföffnung etwa 1,0 mm und am Zellenboden etwa 0,7 mm mißt, und der Zellenboden der Arbeiterinnenzellen (120, 121) kugelkalottenförmig gerundet (125) ausgebildet ist.

10. Kunststoffbienenwabe nach Anspruch 9, dadurch gekennzeichnet, daß etwa 3 % der Zellen gleichmäßig über die Wabe verteilt verstärkte Wandungen aufweisen und die Zellenräume dieser Zellen (129, 130) von innen nach außen einen kontinuierlich abnehmenden Durchmesser haben, wobei die Zellen (129, 130) mit verstärkten Wandungen zum Auswerfen der Kunststoffwaben dienen.

11. Verfahren zum natürlichen Auslesen von Bienen auf Kusntstoffwaben, für die Anwendung bei einer Anlage nach Anspruch 1 oder einem der folgenden, dadurch gekennzeichnet, daß die Königin eines vorausgewählten Bienenvolkes auf einer Kunststoffwabe eingesperrt wird, daß die von der Königin in die Zellen dieser Wabe gelegten Eier zusammen mit der Wabe etwa dreizehn Tage nach dem Bestiften in einen Brutschrank gebracht und ausgebrütet werden, daß von diesen im Brutschrank geschlüpften künftigen, den Futtersaft erzeugenden Ammenbienen eine bestimmte jeweils gleiche Anzahl n (z.B. n = 100) markiert wird, daß von einzelnen unterschiedlichen Völkern jeweils eine gleiche Anzahl von z.B. 5 n (z.B. n = 500) Ammenbienen entnommen und mit den n im Brutschrank geschlüpften Bienen gemischt, nach ca. acht Tagen nochmals dieselbe Menge, z.B. 5 n Ammenbienen entnommen, und zusammen als Kleinvolk in jeweils getrennte Kästen mit Kunststoffwaben eingesetzt werden, daß von diesem Kleinvolk Daten über den Entwicklungsverlauf, insbesondere die Entwicklungszeit, festgestellt werden, und daß das Kleinvolk mit der besten Entwicklung gezielt ausgewählt wird und aus diesen Maden Königinnen für die Weiterzucht gezüchtet werden, wobei vorzugsweise am äußeren Rand der Wabe nach unten stehende, schienenförmige Ansätze (134, 135) in der Ebene der Zellenöffnungen (133) vorgesehen sind und an der Öffnungswand (133) der zylindrischen Zellen (131) Verbindungszapfen (132) beim Spritzgießen angeformt sind, die anschließend in die zylindrischen Zellen (131) eingetrieben werden.

12. Vorrichtung zum Ausschalten der Varroa-Milbe in Bienenwaben, dadurch gekennzeichnet, daß zwischen den Brutwaben aus Kunststoff oder Wachs einer Bienenbeute eine Fangwabe (201) angeordnet ist, deren Zellenabmessungen etwa denen von Drohnenzellen entsprechen, wobei vorzugsweise der Öffnungsdurchmesser der Zellen der Fangwabe etwa 9 mm und der Bodendurchmesser der Zellen der Fangwabe etwa zwischen 7 und 9 mm beträgt.

13. Vorrichtung nach Anspruch 12, dadurch gekennzeichnet, daß der Fangwabe (201) in einem Abstand von etwa 10 mm ein Fanggitter (203) zugeordnet ist, dessen Öffnungen bzw. Maschen (204) für das Durchschlüpfen der Königin zu klein, jedoch ausreichend groß für das Durchschlüpfen der Arbeiterinnenbienen sind, und das so ausgebildet ist, daß der Raum zwischen Fangwabe und Fanggitter geschlossen ist.

14. Vorrichtung nach einem der Ansprüche 12 oder 13, dadurch gekennzeichnet, daß die Zellen der Fangwabe (201) zur Mittelwand hin mit abnehmendem Durchmesser ausgebildet sind, wobei vorzugsweise die Stärke der Zellenwände von außen zum Zellenboden bzw. zur Mittelwand zunehmend ausgebildet ist.

15. Vorrichtung nach einem der Ansprüche 12 - 14, dadurch gekennzeichnet, daß in der Fangwabe (201) über die Wabenfläche etwa gleichmäßig verteilt mehrere Zellen als Auswerfer (210, 211) ausgebildet sind.

16. Verfahren zum Ausschalten der Varroa-Milbe in den Brutwaben von Bienenvölkern, und zum gleichzeitigen Verhindern des Schwärmens dieser Bienenvölker, dadurch gekennzeichnet, daß innerhalb der Brutwaben eines Bienenvolkes bzw. einer Bienenbeute eine Fangvorrichtung vorgesehen wird, die die Milben aufgrund von größeren Zellenöffnungen und vermehrten Futtersaftes anzieht, daß die Milben bevorzugt aufgrund der Größe der Eintrittsöffnung, der Menge an Futtersaft usw. angezogen werden und die übrigen Bienenwaben weitgehend unbeachtet lassen, daß die Bienenkönigin in diese Fangvorrichtungen ca. 15 bis 20 Tage eingesperrt gehalten wird und damit die übrigen Waben nicht bestiftet und somit keine offenen Brutzellen vorhanden sind, und daß die Brutzellen in der Fangwabe durch den Einschluß der Königin offen gehalten werden und dadurch die Varroa-Milben zum Einwandern in diese Zellen animiert.
